# EUROPÄISCHE PATENTSCHRIFT

(11) **EP 1 225 357 B1**
(45) Veröffentlichungstag und Bekanntmachung des Hinweises auf die Patenterteilung: **09.07.2003**
(21) Anmeldenummer: 01129163.0
(22) Anmeldetag: 08.12.2001
(51) Int. Cl.: F16D 3/04

(54) **Kreuzscheibenkupplung**
Oldham-type disc coupling
Accouplement à disques de type oldham

(30) Priorität: 17.01.2001 DE 10101814
(43) Veröffentlichungstag der Anmeldung: 24.07.2002
(73) Patentinhaber: MAN NUTZFAHRZEUGE AG, 80995 München (DE)
(72) Erfinder: Andres, Otmar, Dipl.-Ing., 90427 Nürnberg (DE); Tröbst, Steffen, Dipl.-Ing., 07646 Waldeck (DE); Felsmann, Christian, Dipl.-Ing., 90489 Nürnberg (DE)

(56) Entgegenhaltungen:
- DE-C- 713 709
- GB-A- 586 718
- US-A- 1 352 953
- US-A- 3 438 221

## Beschreibung

Die Erfindung bezieht sich auf eine Kreuzscheibenkupplung gemäß dem Gattungsbegriff des Patentanspruches 1. Eine solche Kupplung ist aus DE 713 709C (Viola) bekannt.

Um den Wellenversatz in Kupplungen auszugleichen bedient man sich sogenannter Kreuzscheibenkupplungen. Diese bestehen im wesentlichen aus zwei Kupplungsteilen, welche einer treibenden und einer angetriebenen Welle zugeordnet sind und einer zwischen den Kupplungsteilen gelagerten Kreuzscheibe. Zur Mitnahme der Kreuzscheibe weist diese vier gleichmäßig über den Umfang verteilte Nuten auf. In diese Nuten greifen jeweils zwei diametral zueinander angeordnete Klauen ein, welche den jeweiligen Kupplungsteilen zugeordnet sind. Zwischen den Nuten und den Klauen ist im eingebauten Zustand ein radiales Spiel, um einen Versatz der Kupplungsteile auszugleichen. Ein Nachteil einer derartigen Kreuzscheibenkupplung ist darin zu sehen, daß bei einer Vorzeichenänderung des Drehmomentes die Klauen infolge des Spiels gegen die Nuten schlagen und es zu sehr störenden Geräuschen kommt. Eine derartige Vorzeichenänderung des Drehmoments tritt z.B. beim Antrieb von Luftpressern durch Rückexpansion nach Überschreitung des oberen Totpunktes auf.

Aufgabe der Erfindung ist die Beseitigung von Getriebegeräuschen bei Kreuzscheibenkupplungen.

Erfindungsgemäß wird diese Aufgabe durch die kennzeichnenden Merkmale des Patentanspruches 1 gelöst.

Durch die in Umfangsrichtung gesehen unter Vorspannung eingebaute Kreuzscheibe liegen die Klauen im eingebauten Zustand an den Seitenwänden der Nuten an, so daß die Geräusche durch das Aufeinanderschlagen vermieden werden. Da die Nuten in radialer Richtung gesehen nach wie vor ein Spiel gegenüber den Klauen aufweisen, ist das Spiel zwischen den Kupplungsteilen dennoch gewährleistet, so daß in einem vorgegebenen Umfang ein Versatz gewährleistet ist.

Eine vorteilhafte Weiterbildung kann dem Anspruch 2 entnommen werden. Durch die über den Umfang verteilten Mitnehmer auf dem Elastomer ist eine verbesserte Mitnahme der Scheiben untereinander möglich.

Ein Ausführungsbeispiel einer erfindungsgemäßen Kreuzscheibenkupplung ist an Hand von Zeichnungen dargestellt Es zeigt:
- Fig. 1: einen Schnitt I-I durch zwei Scheiben einer Kreuzscheibe
- Fig. 2: eine Ansicht der aus zwei Scheiben bestehenden Kreuzscheibe mit einem Winkelversatz Δγ

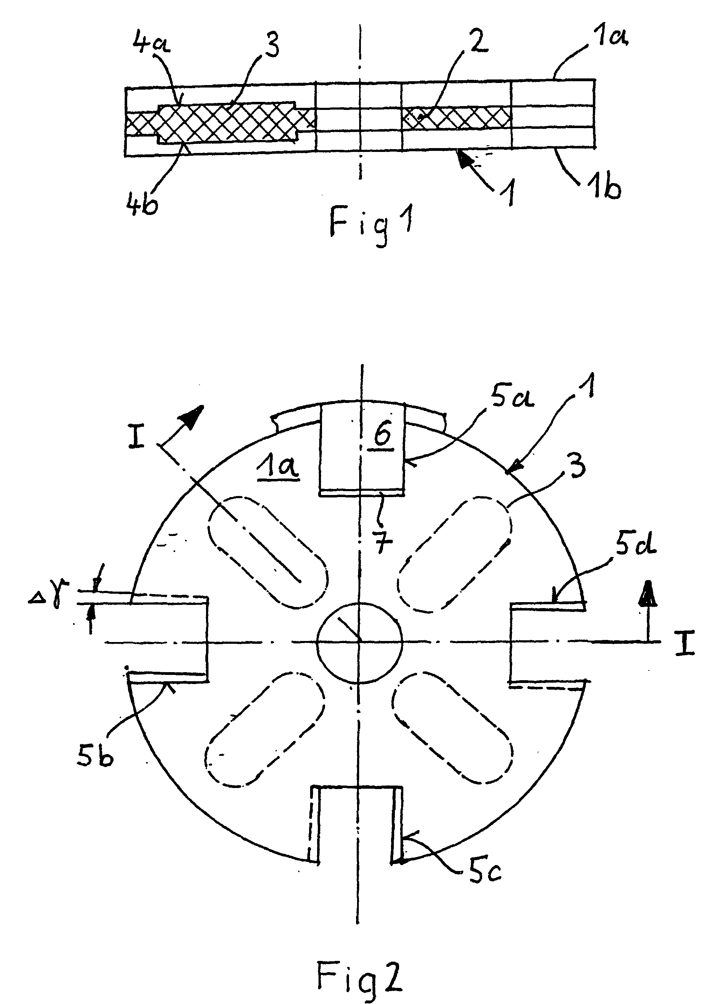

Figur 1 zeigt in einem Schnitt I-I eine Kreuzscheibe 1 einer Kreuzscheibenkupplung. Im dargestellten Ausführungsbeispiel beseht die Kreuzscheibe 1 aus zwei Scheiben 1a, 1b. Erfindungsgemäß werden die Scheiben 1a, 1b durch ein Elastomer 2 drehmomentschlüssig verbunden. Die Verbindung kann durch Vulkanisation erfolgen. Eine Verbesserung dieser Verbindung kann durch Mitnehmer 3 erzielt werden die mit dem Elastomer eine bauliche Einheit bilden und welche in Ausnehmungen 4a, 4b der Scheiben 1a, 1b eingreifen und so einen zusätzlichen Formschluß herstellen. Es versteht sich, daß an Stelle der beiden Scheiben 1a, 1b auch mehrere Scheiben aufeinandergeschichtet werden können.

Figur 2 zeigt eine Ansicht der Kreuzscheibe 1. Die direkte Draufsicht erfolgt auch die Scheibe 1a, die darunterliegende Scheibe sei 1b. Beide Scheiben 1a, 1b wiesen über den Umfang gleichmäßig verteilte Nuten 5a bis 5d auf. Die Scheiben 1a, 1b sind durch den aus Figur 1 ersichtlichen Elastomer 2 verbunden. Eine Verbesserung der Verbindung erfolgt durch Formschluß mittels der Mitnehmer 3. Die darunterliegende Scheibe 1b weist die gleichen Nuten auf, die allerdings vor dem Einbau um den Winkel Δγ gegenüber den Nuten der Scheibe 1a verdreht sind. Bei der Montage greifen hier nicht näher dargestellt Klauen eines Kupplungsteiles in die Nuten 5a bis 5d ein.

Zum besseren Verständnis ist eine Klaue 6 dargestellt. Die Klaue 6 hat zur Nut 5a ein radiales Spiel 7, um einen Wellenversatz der hier nicht dargestellten Kupplungsteile auszugleichen.

Um nun aber trotz des Spieles 7 und eines gewissen seitlichen Spiels ein Aufeinanderschlagen der Nuten 5a bis 5d und der in sie eingreifenden Klauen zu verhindern sind erfindungsgemäß die Scheiben 1a und die in Figur 2 darunterliegende Scheibe 1b um den Winkel Δγ verdreht. Wenn nun die Klauen, so wie es an Hand der Klaue 6 gezeigt ist, in die Nuten eingreifen, wenn also die Klaue 6 mit den Nuten 5a der Scheiben 1a, 1b zur Deckung kommen, wird die Scheibe 1a gegen die Scheibe 1b verdreht.

Da nach Figur 1 die Scheiben 1a, 1b mit dem Elastomer 2 verbunden sind erfolgt eine Rückdrehung der Scheibe 1a unter dem Aufwand eines Drehmoments das sich aus den Dimensionierungen der Scheiben 1a, 1b und des Elastomer 2 ergibt. Die Klauen kommen somit trotz des Spiels 7 seitlich in den Nuten zur Anlage, so daß Getriebegeräusche bei Drehmomentwechsel vermieden werden.

Es versteht sich, daß an Stelle von zwei Scheiben 1a, 1b auch drei oder mehr Scheiben mit dazwischenliegenden Elastomeren angewendet werden können.

## Patentansprüche

1. Kreuzscheibenkupplung bestehend aus zwei Kupplungsteilen, wobei jedes der Kupplungsteile zwei diametral gegenüberliegende Klauen (6) aufweist, welche in Nuten (5) einer zwischen den Kupplungsteilen liegenden Kreuzscheibe (1) eingreifen und zwischen Klauen und Nuten ein radiales Spiel herrscht, derart, daß radiale Versetzungen der Kupplungsteile ausgeglichen werden, **dadurch gekennzeichnet, daß** die Kreuzscheibe (1) aus mindestens zwei Scheiben (1a, 1b) gebildet wird, daß die Scheiben (1a, 1b) durch dazwischenliegende Elastomere (2) drehmomentschlüssig verbunden sind und daß die Scheiben (1a, 1b) der Kreuzscheibe (1) vor dem Einbau um einen Winkel Δγ gegeneinander verdreht sind, so daß die Teile nach dem Einbau eine Vorspannung in Umfangsrichtung aufweisen.

2. Kreuzscheibenkupplung nach Anspruch 1, **dadurch gekennzeichnet, daß** das zwischen den Scheiben (1a, 1b) befindliche Elastomer (2) mit den Scheiben (1a, 1b) durch Vulkanisation verbunden ist und daß zur Verbesserung der Drehmomentübertragung das Elastomer (2) über den Umfang verteile Mitnehmer (3) aufweist, welche in Ausnehmungen (4a, 4b) der angrenzenden Scheiben (1a, 1b) formschlüssig eingreifen.

## Claims

1. Cross-disc coupling consisting of two coupling parts, each of which having two diametrically opposite claws (6) penetrating into grooves (5) on a cross-type disc (1) arranged between said coupling parts, and a radial play existing between the claws and the grooves so that radial offsets of the coupling parts are compensated for, **characterised in that** the cross-type disc (1) is composed of at least two discs (1a, 1b), that the discs (1a, 1b) are torque-connected with each other by means of intermediate elastomer elements (2) and that prior to their installation the discs (1a, 1b) of the cross-type disc (1) are twisted in relation to each other by an angle ??, so that after their installation the parts are provided with a preload in peripheral direction.

2. Cross-disc coupling according to Claim 1, **characterised in that** the elastomer element (2) located between the discs (1a, 1b) is connected with said discs (1a, 1b) by means of vulcanisation and that for improved torque transmission the elastomer element (2) is provided with drivers (3) arranged along its circumference and positively meshing with recesses (4a, 4b) in the adjacent discs (1a, 1b).

## Revendications

1. Accouplement à disques à croisillon composé de deux parties d'accouplement, chaque partie ayant deux griffes (6) diamétralement opposées venant dans des rainures (5) d'un disque à croisillon (1) installé entre les deux parties d'accouplement et un jeu radial existant entre les griffes et les rainures de façon à compenser le décalage radial des parties d'accouplement,
**caractérisé en ce que**
le disque à croisillon (1) se compose d'au moins deux flasques (1a, 1b),
les flasques (1a, 1b) sont reliés par une liaison de transmission de couple par un élastomère (2) interposé et
les flasques (1a, 1b) du disque à croisillon (1) sont tournés l'un par rapport à l'autre d'un angle Δγ avant le montage de façon que les parties présentent après le montage une précontrainte dans la direction périphérique.

2. Accouplement à disques à croisillon selon la revendication 1,
**caractérisé en ce que**
l'élastomère (2), placé entre les flasques (1a, 1b), est relié par vulcanisation aux flasques (1a, 1b) et
pour mieux transmettre le couple, l'élastomère (2) présente des organes d'entraînement (3) répartis à la périphérie, ces organes d'entrainement pénétrant par une liaison de forme dans les cavités (4a, 4b) des flasques adjacents (1a, 1b).
